# FASCICULE DE BREVET EUROPEEN

(11) **EP 3 878 242 B1**
(45) Date de publication et mention de la délivrance du brevet: **04.12.2024**
(21) Numéro de dépôt: 19797310.0
(22) Date de dépôt: 07.11.2019
(51) Int. Cl.: H05B 45/48, F21S 41/153

(54) **DISPOSITIF LUMINEUX POUR UN VEHICULE AUTOMOBILE COMPRENANT UNE SOURCE LUMINEUSE MATRICIELLE**
LEUCHTENVORRICHTUNG FÜR EIN KRAFTFAHRZEUG MIT EINER MATRIXLICHTQUELLE
LIGHT DEVICE FOR A MOTOR VEHICLE, COMPRISING A MATRIX LIGHT SOURCE

(30) Priorité: 09.11.2018 FR 1860333
(43) Date de publication de la demande: 15.09.2021
(73) Titulaire: Valeo Vision, 93012 Bobigny Cedex (FR)
(72) Inventeur: DAROUSSIN, Samuel, 93012 BOBIGNY CEDEX (FR); ZOJCESKI, Zdravko, 93012 BOBIGNY Cedex (FR)
(74) Mandataire: Valeo Visibility
(86) Numéro de dépôt international: PCT/EP2019/080604
(87) Numéro de publication internationale: WO 2020/094812

(56) Documents cités:
- CN-U- 203 504 857
- CN-U- 203 504 857
- JP-A- 2016 203 863
- JP-A- 2016 203 863
- US-A1- 2012 223 875
- US-A1- 2012 223 875
- US-A1- 2015 332 635
- US-A1- 2015 332 635
- US-A1- 2017 330 509
- US-B1- 9 974 135

## Description

L'invention se rapporte aux dispositifs lumineux pour véhicules automobiles, impliquant des sources lumineuses matricielles à éléments semi-conducteurs électroluminescents. En particulier, l'invention se rapporte à un tel dispositif lumineux, dont les sources lumineuses élémentaires qui constituent la source lumineuse matricielle présentent des surfaces émettrices restreintes.

Une diode électroluminescente, LED, est un composant électronique semi-conducteur capable d'émettre de la lumière lorsqu'il est parcouru par un courant électrique. Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc... L'intensité lumineuse émise par une LED est en général dépendante de l'intensité du courant électrique qui la traverse. Entre autres, une LED est caractérisée par une valeur seuil d'intensité de courant électrique. Ce courant direct (« forward current ») maximal est en général décroissant à température croissante. De même, lorsqu'une LED émet de la lumière, on observe à ses bornes une chute de tension égale à sa tension directe ou nominale (« forward voltage »). En pilotant l'alimentation électrique d'une diode électroluminescente de manière à varier l'intensité moyenne du courant électrique qui la traverse, il est possible de réaliser une gradation de l'intensité lumineuse (« dimming ») de la LED. Il est connu de réaliser cette fonctionnalité en commandant une LED à l'aide d'un signal de commande binaire de modulation de largeur d'impulsions, PWM (« pulse width modulation »). Le fonctionnement de la LED s'en voit alterné de manière périodique entre un état émetteur de lumière et un état éteint. La température d'une LED augmente pendant la phase émettrice. Pour des LEDs ayant une surface émettrice de un à plusieurs millimètres carrés, leur constante de temps thermique est de l'ordre de 20 millisecondes ou plus. C'est-à-dire que lors d'une phase « émettrice » d'un cycle PWM à 200, 100 ou 50 Hz, la température de la LED augmente de moins de 20°C, pour se refroidir lors de la phase « éteinte » qui suit. Les variations de température de cet ordre n'engendrent en général pas d'endommagements au niveau de sa jonction semi-conductrice.

L'utilité de matrices de LEDs comprenant un nombre important de pixels, ou de manière équivalent, de sources lumineuses électroluminescentes élémentaires ayant chacune une surface émettrice restreinte submillimétrique, est intéressante dans de nombreux domaines d'application, et notamment aussi dans le domaine d'éclairage et de la signalisation des véhicules automobiles. Une matrice de LEDs peut par exemple être utilisée pour créer des formes de faisceaux lumineux intéressantes pour des fonctions lumineuses telles que les feux de route ou les feux diurnes. En plus, plusieurs fonctions lumineuses différentes peuvent être réalisées à l'aide d'une matrice unique, réduisant ainsi l'encombrement physique dans l'espace restreint d'un feu de véhicule automobile.

La surface émettrice des sources lumineuses élémentaires est plus petite que celle des LEDs ordinairement connues, d'un facteur allant jusqu'à cent ou plus. La constante de temps thermique des sources lumineuses élémentaires est donc également moins importante, et dépendant du procédé de fabrication de pixels utilisé, cette constante peut être de l'ordre de la milliseconde. L'utilisation d'unités de contrôle pour LEDs connues dans l'art, capables de générer des signaux PWM de l'ordre de 200Hz, est mal adaptée à une telle matrice de pixels, puisque lors d'un cycle « émetteur » du signal PWM la température de jonction de chaque source lumineuse élémentaire de la matrice peut augmenter de nettement plus de 20°C, pour se refroidir lors du cycle « éteint » qui suit. Des variations de température de cet ordre risquent d'endommager durablement les jonctions semi-conductrices des sources lumineuses élémentaires, qui finissent par devenir défaillantes. Le document US 9974135 B1 concerne une lampe pour véhicule comprenant une matrice de pixels, chaque pixel ayant une surface émettrice submillimétrique restreinte.

L'invention a pour objectif de pallier à au moins un des problèmes posés par l'art antérieur. Plus précisément, l'invention a pour objectif de proposer un dispositif lumineux impliquant une source lumineuse matricielle qui permet une gradation de l'intensité lumineuse émise par chaque source lumineuse élémentaire qui compose sa matrice sans engendrer des défaillances dues à une surchauffe de leur jonctions semiconductrices.

Selon un premier aspect de l'invention, un dispositif lumineux pour un véhicule automobile conformément à la revendication 1 est proposé. Le dispositif comprend une source lumineuse matricielle ayant une matrice de sources lumineuses élémentaires à élément semi-conducteur électroluminescent, et un circuit de gestion de l'alimentation électrique d'au moins un groupe de sources lumineuses élémentaires, le circuit de gestion de l'alimentation électrique comprenant une unité de commande et, pour chaque source lumineuse élémentaire du groupe, un élément interrupteur pour connecter de manière sélective ladite source lumineuse élémentaire à une source d'électricité, l'unité de commande étant en outre destinée à commander l'état d'ouverture des éléments interrupteurs moyennant un signal de commande binaire à modulation de largeur d'impulsions. Le dispositif est remarquable en ce que la surface émettrice de chacune des sources lumineuses élémentaires est inférieure ou égale à 0.2 mm², et en ce que l'unité de commande est apte à émettre un signal de commande ayant une fréquence supérieure ou égale à 300 Hz.

De préférence, la fréquence du signal de commande peut être supérieure ou égale à 1 kHz.

Ledit groupe de sources lumineuses élémentaires peut préférentiellement comprendre toutes les sources lumineuses élémentaires de la matrice de sources lumineuses élémentaires.

Le circuit de gestion de l'alimentation électrique peut de préférence être configuré pour commander l'état d'ouverture des éléments interrupteurs d'au moins deux groupes de sources lumineuses élémentaire de la matrice de sources lumineuses élémentaires en alternance.

De préférence, les deux groups peuvent être disjoints. De préférence, sur une rangée de la matrice de sources lumineuses élémentaires, des sources lumineuses élémentaires d'un premier groupe peuvent s'alterner avec des sources lumineuses élémentaires d'un deuxième groupe. De préférence, sur une colonne de la matrice de sources lumineuses élémentaires du premier groupe peuvent s'alterner avec des sources lumineuses élémentaires du deuxième group.

La source lumineuse matricielle peut de préférence comprendre un circuit intégré en contact avec la matrice de sources lumineuses. Le circuit intégré peut préférentiellement comprendre au moins une partie du circuit de gestion de l'alimentation électrique des sources lumineuses élémentaires. Il s'agit par exemple desdits éléments interrupteurs. Les éléments interrupteurs peuvent de préférence être des transistors à effet de champs de type MOSFET (« métal oxyde semiconductor field effect transistor »).

Le circuit intégré est destiné à être en contact mécanique et électrique avec une matrice de sources lumineuses élémentaires de la source lumineuse matricielle.

De préférence, le dispositif peut comprendre des moyens d'atténuation de fréquences acoustiques. Les moyens d'atténuation peuvent par exemple comprendre des matériaux acoustiquement isolants en soi connus dans l'art afin d'atténuer la transmission de fréquence acoustiques vers l'extérieur du dispositif.

Le circuit intégré peut de préférence comprendre pour chacune des sources lumineuses élémentaires de la matrice de sources lumineuse élémentaires une unité de retard configurée pour retarder d'une durée prédéterminée l'alimentation de la source élémentaire suite à la réception d'une commande du signal de commande.

De manière préférée, l'unité de retard de chaque source lumineuse élémentaire peut être reliée fonctionnellement à l'unité de retard d'une autre source lumineuse élémentaire, l'agencement étant tel que le retard pour la deuxième source lumineuse élémentaire ne commence qu'à s'écouler une fois que le retard de la première source lumineuse élémentaire s'est écoulé.

Le retard pour chaque source lumineuse élémentaire peut de préférence être identique.

De préférence, l'unité de retard peut comprendre un élément de mémoire pour l'enregistrement d'une valeur de retard. L'unité de retard peut de manière préférée comprendre une ligne de retard.

De préférence, les lignes de retard associées à toutes les sources lumineuses élémentaires peuvent être cadencées moyennant le même signal d'horloge.

La matrice de sources lumineuse élémentaire peut de préférence comprendre un substrat commun supportant les sources lumineuses élémentaires. Le substrat commun de la matrice peut de préférence comprendre du SiC.

Chaque source lumineuse peut de préférence être associée à son élément de mémoire et son circuit de gestion de l'alimentation électrique, les éléments de mémoire et les circuits de gestion de associés à des sources lumineuses élémentaires différentes étant indépendants les uns des autres.

Le circuit intégré peut de préférence comprendre un substrat en Si. De préférence, le circuit intégré est soudé ou collé à la matrice de sources lumineuses élémentaires, par exemple à un au substrat commun supportant les sources lumineuses élémentaires. Le circuit intégré est de préférence soudé ou collé à la face inférieure du substrat commun, opposée à la face qui comprend les sources lumineuses élémentaires. De préférence, le circuit intégré est en contact mécanique, par exemple par le biais de moyens de fixation, et électrique avec le substrat commun, qui présente des zones de connexion électriques sur sa face inférieure.

La source lumineuse pixélisée, ou de manière équivalente, la source lumineuse matricielle, peut de préférence comprendre au moins une matrice d'éléments électroluminescents - les sources lumineuse élémentaires - (appelée en anglais monolithic array) agencés selon au moins deux colonnes par au moins deux lignes. De préférence, la source électroluminescente comprend au moins une matrice d'éléments électroluminescents monolithique, aussi appelée matrice monolithique.

Dans une matrice monolithique, les éléments électroluminescents sont crûs depuis un substrat commun et sont connectés électriquement de manière à être activables sélectivement, individuellement ou par sous-ensemble d'éléments électroluminescents. Ainsi chaque élément électroluminescent ou groupe d'éléments électroluminescents peut former l'un des émetteurs élémentaires de ladite source lumineuse pixélisée qui peut émettre de la lumière lorsque son ou leur matériau est alimenté en électricité

Différents agencements d'éléments électroluminescents peuvent répondre à cette définition de matrice monolithique, dès lors que les éléments électroluminescents présentent l'une de leurs dimensions principales d'allongement sensiblement perpendiculaire à un substrat commun et que l'écartement entre les émetteurs élémentaires, formés par un ou plusieurs éléments électroluminescents regroupés ensemble électriquement, est faible en comparaison des écartements imposés dans des agencements connus de chips carrés plates soudés sur une carte de circuits imprimés.

Le substrat peut être majoritairement en matériau semi-conducteur. Le substrat peut comporter un ou plusieurs autres matériaux, par exemple non semi-conducteurs. Ces éléments électroluminescents, de dimensions submillimétriques, sont par exemple agencés en saillie du substrat de manière à former des bâtonnets de section hexagonale. Les bâtonnets électroluminescents prennent naissance sur une première face d'un substrat. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. A titre d'exemple, les bâtonnets électroluminescents pourraient être réalisés à partir d'un alliage de nitrure d'aluminium et de nitrure de gallium (AlGaN), ou à partir d'un alliage de phosphores d'aluminium, d'indium et de gallium (AlInGaP). Chaque bâtonnet électroluminescent s'étend selon un axe d'allongement définissant sa hauteur, la base de chaque bâtonnet étant disposée dans un plan de la face supérieure du substrat.

Les bâtonnets électroluminescents d'une même matrice monolithique présentent avantageusement la même forme et les mêmes dimensions. Ils sont chacun délimités par une face terminale et par une paroi circonférentielle qui s'étend le long de l'axe d'allongement du bâtonnet. Lorsque les bâtonnets électroluminescents sont dopés et font l'objet d'une polarisation, la lumière résultante en sortie de la source à semi-conducteurs est émise essentiellement à partir de la paroi circonférentielle, étant entendu que des rayons lumineux peuvent sortir également de la face terminale. Il en résulte que chaque bâtonnet électroluminescent agit comme une unique diode électroluminescente et que la luminance de cette source est améliorée d'une part par la densité des bâtonnets électroluminescents présents et d'autre part par la taille de la surface éclairante définie par la paroi circonférentielle et qui s'étend donc sur tout le pourtour, et toute la hauteur, du bâtonnet. La hauteur d'un bâtonnet peut être comprise entre 2 et 10 µm, préférentiellement 8 µm. La plus grande dimension de la face terminale d'un bâtonnet est inférieure à 2 µm, préférentiellement inférieure ou égale à 1 µm.

On comprend que, lors de la formation des bâtonnets électroluminescents, la hauteur peut être modifiée d'une zone de la source lumineuse pixélisée à l'autre, de manière à accroitre la luminance de la zone correspondante lorsque la hauteur moyenne des bâtonnets la constituant est augmentée. Ainsi, un groupe de bâtonnets électroluminescents peut avoir une hauteur, ou des hauteurs, différentes d'un autre groupe de bâtonnets électroluminescents, ces deux groupes étant constitutifs de la même source lumineuse à semi-conducteur comprenant des bâtonnets électroluminescents de dimensions submillimétriques. La forme des bâtonnets électroluminescents peut également varier d'une matrice monolithique à l'autre, notamment sur la section des bâtonnets et sur la forme de la face terminale. Les bâtonnets présentent une forme générale cylindrique, et ils peuvent notamment présenter une forme de section polygonale, et plus particulièrement hexagonale. On comprend qu'il importe que de la lumière puisse être émise à travers la paroi circonférentielle, que celle-ci présente une forme polygonale ou circulaire.

Par ailleurs, la face terminale peut présenter une forme sensiblement plane et perpendiculaire à la paroi circonférentielle, de sorte qu'elle s'étend sensiblement parallèlement à la face supérieure du substrat, ou bien elle peut présenter une forme bombée ou en pointe en son centre, de manière à multiplier les directions d'émission de la lumière sortant de cette face terminale.

Les bâtonnets électroluminescents peuvent de préférence être agencés en matrice à deux dimensions. Cet agencement pourrait être tel que les bâtonnets soient agencés en quinconce. De manière générale, les bâtonnets sont disposés à intervalles réguliers sur le substrat et la distance de séparation de deux bâtonnets électroluminescents immédiatement adjacents, dans chacune des dimensions de la matrice, doit être au minimum égale à 2 µm, préférentiellement comprise entre 3 µm et 10 µm, afin que la lumière émise par la paroi circonférentielle de chaque bâtonnet puisse sortir de la matrice de bâtonnets électroluminescents. Par ailleurs, on prévoit que ces distances de séparation, mesurées entre deux axes d'allongement de bâtonnets adjacents, ne soient pas supérieures à 100 µm.

Alternativement, la matrice monolithique peut comporter des éléments électroluminescents formés par des couches d'éléments électroluminescents épitaxiées, notamment une première couche en GaN dopée n et une seconde couche en GaN dopée p, sur un substrat unique, par exemple en carbure de silicium, et que l'on découpe (par meulage et/ou ablation) pour former une pluralité d'émetteurs élémentaires respectivement issus d'un même substrat. Il résulte d'une telle conception une pluralité de blocs électroluminescents tous issus d'un même substrat et connectés électriquement pour être activables sélectivement les uns des autres.

Dans un exemple de réalisation selon cet autre mode, le substrat de la matrice monolithique peut présenter une épaisseur comprise entre 5 µm et 800 µm, notamment égale à 200 µm ; chaque bloc peut présenter une longueur et une largeur, chacune étant comprise entre 50 µm et 500 µm, préférentiellement comprise entre 100 µm et 200 µm. Dans une variante, la longueur et la largeur sont égales. La hauteur de chaque bloc est inférieure à 500 µm, préférentiellement inférieur à 300 µm. Enfin la surface de sortie de chaque bloc peut être faite via le substrat du côté opposée à l'épitaxie. La distance de séparation entre deux émetteurs élémentaires. La distance entre chaque émetteur élémentaire contigu peut être inférieure à 1 mm, notamment inférieure à 500 µm, et elle est préférentiellement inférieure à 200 µm.

Alternativement, aussi bien avec des bâtonnets électroluminescents s'étendant respectivement en saillie d'un même substrat, tels que décrit ci-dessus, qu'avec des blocs électroluminescents obtenus par découpage de couches électroluminescentes superposées sur un même substrat, la matrice monolithique peut comporter en outre une couche d'un matériau polymère dans laquelle les éléments électroluminescents sont au moins partiellement noyés. La couche peut ainsi s'étendre sur toute l'étendue du substrat ou seulement autour d'un groupe déterminé d'éléments électroluminescents. Le matériau polymère, qui peut notamment être à base de silicone, crée une couche protectrice qui permet de protéger les éléments électroluminescents sans gêner la diffusion des rayons lumineux. En outre, il est possible d'intégrer dans cette couche de matériau polymère des moyens de conversion de longueur d'onde, et par exemple des luminophores, aptes à absorber au moins une partie des rayons émis par l'un des éléments et à convertir au moins une partie de ladite lumière d'excitation absorbée en une lumière d'émission ayant une longueur d'onde différente de celle de la lumière d'excitation. On pourra prévoir indifféremment que les luminophores sont noyés dans la masse du matériau polymère, ou bien qu'ils soient disposés en surface de la couche de ce matériau polymère.

La source lumineuse pixélisée peut comporter en outre un revêtement de matériau réfléchissant pour dévier les rayons lumineux vers les surfaces de sorties de la source lumineuse.

Les éléments électroluminescents de dimensions submillimétriques définissent dans un plan, sensiblement parallèle au substrat, une surface de sortie déterminée. On comprend que la forme de cette surface de sortie est définie en fonction du nombre et de l'agencement des éléments électroluminescents qui la composent. On peut ainsi définir une forme sensiblement rectangulaire de la surface d'émission, étant entendu que celle-ci peut varier et prendre n'importe quelle forme sans sortir du contexte de l'invention.

En utilisant les mesures proposées par la présente invention, il devient possible de proposer un dispositif lumineux pour un véhicule automobile, dans lequel les sources lumineuses élémentaires semi-conductrices d'une source lumineuse matricielle ou pixelisée peuvent être commandées par un signal de type modulation de largeurs d'impulsions, PWM, sans pour autant risquer l'endommagement des jonctions semi-conductrices des sources lumineuses élémentaires. En adoptant une fréquence PWM élevée, notamment de 300 Hz ou plus, et de préférence d'au moins 1 kHz, les sources lumineuses élémentaires ayant une surface émettrice de moins de 2 mm², ne risquent pas de se réchauffer de plus de 20°C lors d'une phase « émettrice » du signal de commande. Selon des aspects de l'invention, plusieurs groupes de sources lumineuses élémentaires de la matrice pixellisée sont commandées par un signal de type PWM de manière décalée dans le temps. Ceci permet de réduire encore plus l'augmentation de la température au niveau des jonctions semi-conductrices. En effet, comme les sources lumineuses élémentaires sont petites et spatialement très rapprochées les unes des autres, l'échauffement de chaque source suite à son alimentation électrique peut potentiellement contribuer à l'échauffement de sources voisines et vice-versa. En limitant le nombre de sources lumineuses élémentaires avoisinantes alimentées à un instant donné, cette contribution d'échauffement mutuelle peut être au moins partiellement mitigée. La source lumineuse matricielle selon des aspects de l'invention peut notamment comprendre un circuit intégré qui abrite, potentiellement pour chaque source lumineuse élémentaire, un élément de mémoire pour y enregistrer une valeur qui correspond à une consigne d'intensité de luminosité, et un circuit de gestion de l'alimentation électrique de la source lumineuse élémentaire. Le circuit de gestion de l'alimentation électrique adapte l'intensité moyenne du courant électrique, par exemple moyennant un signal de commande de type modulation de largeur d'impulsion, PWM (« pulse width modulation ») pour la source lumineuse élémentaire en question. Ainsi la gradation de l'intensité lumineuse émise par chaque pixel est réalisée par la source matricielle elle-même. La consigne de luminosité est la seule commande externe dont le circuit de gestion de l'alimentation électrique de la source lumineuse élémentaire a besoin pour commander la source élémentaire. Comme les mesures de l'invention contribuent à la mitigation du sur-échauffement des jonctions semi-conductrices d'une matrice pixellisée de diodes électroluminescentes, l'invention permet d'augmenter la durée de vie de ces composants dont la fabrication est onéreuse est techniquement difficile.

D'autres caractéristiques et avantages de la présente invention seront mieux compris à l'aide de la description des exemples et des dessins parmi lesquels :
- la figure 1 montre de manière schématique dispositif lumineux selon un mode de réalisation préféré de l'invention ;
- la figure 2 montre de manière schématique une coupe à travers un dispositif lumineux selon un mode de réalisation préféré de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre d'exemples et de manière non limitative. Des numéros de référence similaires seront utilisés pour décrire des concepts semblables à travers différents modes de réalisation de l'invention. Par exemple, les références 100 et 200 désignent deux modes de réalisation d'un dispositif lumineux selon l'invention.

La description se concentre sur les éléments d'un dispositif lumineux pour un véhicule automobile qui sont nécessaire à la compréhension de l'invention. D'autres éléments, qui font de manière connue partie de tels dispositifs, ne seront pas mentionnées ni décrits en détails. Il va par exemple de soi qu'un dispositif lumineux comprend des éléments structurels pour la mise en place des composants décrits, ou par exemple un élément de dissipation thermique tel qu'un radiateur.

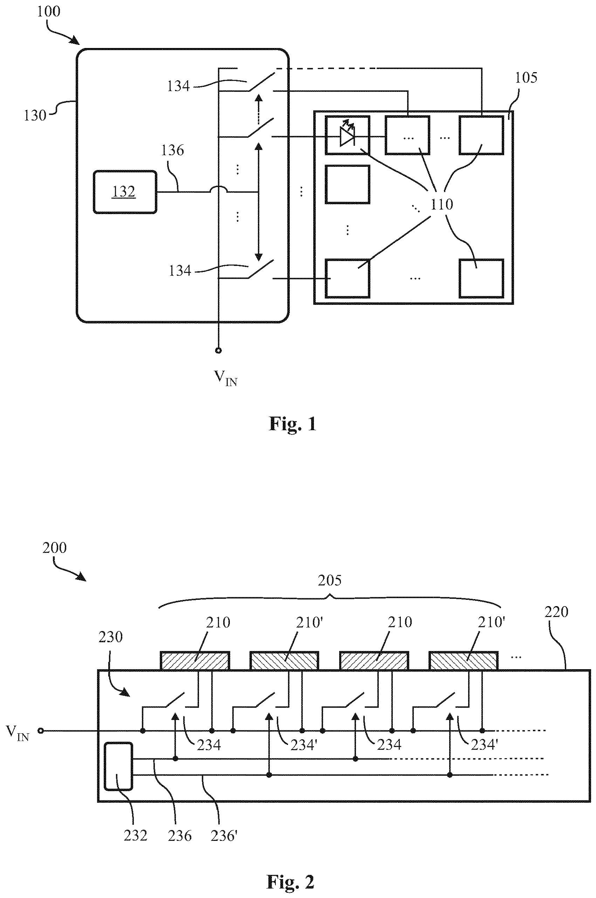

L'illustration de la figure 1 montre un dispositif lumineux 100 comprenant une source lumineuse pixelisée ou matricielle 105 selon un mode de réalisation préféré de l'invention. La source lumineuse matricielle 105 comprend une pluralité de sources lumineuses élémentaires à élément semi-conducteur électroluminescent 110 et un substrat commun non-illustré. Chaque source lumineuse élémentaire comprend une surface émettrice d'une étendue de 0,14 x 0,14 mm, ou moins. Lorsqu'une source lumineuse élémentaire de cette taille est parcourue par un courant électrique d'une intensité supérieure ou égale à l'intensité du courant direct, elle subit un gradient de température de l'ordre de 20°C au bout de quelques millisecondes, voire d'une milliseconde.

La source lumineuse matricielle 105 comprend de préférence un composant matriciel monolithique, dans lequel les couches semi-conductrices des sources lumineuses élémentaires 110 sont, par exemple, disposées sur le substrat commun. La matrice de sources lumineuses élémentaires 110 comprend de préférence un montage en parallèle d'une pluralité de branches, chaque branche comprenant des sources lumineuses semi-conductrices électroluminescentes 110.

Le dispositif 100 comprend un circuit de gestion de l'alimentation électrique 130 d'un groupe de sources lumineuses élémentaires. Dans l'exemple de la figure 1, ce groupe comprend toutes les sources lumineuses de la matrice 105, sans pour autant que l'invention se limite à ce mode de réalisation. Le circuit de gestion comprend pour chaque source lumineuse élémentaire, un dispositif interrupteur qui est commandé par le biais d'un signal de command 136 pour prendre un état ouvert ou un état fermé. L'agencement est tel que, lorsque l'interrupteur est dans l'état fermé, la source lumineuse élémentaire correspondante est connectée à une source d'électricité, alors que dans l'état ouvert, la source lumineuse élémentaire n'y est pas connectée. D'autres agencements sont envisageables pour commander l'état émetteur de lumière/éteint d'une source lumineuse élémentaire, sans pour autant sortir du cadre de la présente invention.

La source d'électricité peut par exemple comprendre un circuit convertisseur configuré pour transformer une tension/un courant électrique d'entrée, fourni par exemple par une source interne au véhicule automobile, telle qu'une batterie, en une tension/un courant de charge, d'une valeur/intensité appropriée à l'alimentation électrique de la matrice 105.

Une unité de commande 132 génère le signal de commande 136. Le signal est d'allure binaire, correspondant aux deux états distincts que les éléments interrupteurs 134 peuvent prendre. Il s'agit d'un signal à modulation de largeur d'impulsions, PWM, dont la fréquence est supérieure ou égale à 300Hz, et de préférence supérieur ou égale à 1kHz. A cette fréquence, la phase pendant laquelle un interrupteur 134 est fermé et pendant laquelle la source lumineuse élémentaire correspondante 110 émet de la lumière et s'échauffe, est suffisamment courte pour que sa jonction semi-conductrice ne s'échauffe pas plus de 20°C. Ceci évite une détérioration de la jonction. La phase d'échauffement, qui équivaut à la durée pendant laquelle une source lumineuse élémentaire est alimentée de manière continue, ne dépasse pas la constante de temps thermique de ladite source lumineuse élémentaire. Des circuits électroniques aptes à générer des signaux PWM tels qu'ils viennent d'être décrits sont en soi connus et leurs agencement et fonctionnement ne sera par décrit en plus de détail dans le cadre de cette invention.

Lorsque la source lumineuse matricielle est pilotée en tension électrique, le pilotage de chaque source élémentaire, ou de manière équivalente, de chaque pixel, se réduit à la commande d'un dispositif interrupteur 134 tel qu'il est schématisé sur la figure 1. En commandant l'état du dispositif 134, la source lumineuse élémentaire 110 peut être connectée de manière sélective à la source de tension Vin. Le dispositif interrupteur est par exemple réalisé par un transistor à effet de champ de type MOSFET caractérisé de préférence par une chute de tension faible entre ses bornes drain et source, et commandé par un signal de commande 136 en provenance du circuit de gestion de l'alimentation 132. Le signal de commande 136 est un signal à modulation de largeur d'impulsion, PWM. Il s'agit d'un signal binaire cyclique. Le choix du rapport cyclique, i.e., la durée respective de la phase non-nulle et de la phase nulle du cycle, influence de manière directe la valeur moyenne du signal, qui est comprise entre les valeurs extrêmes du signal. Le signal cyclique 136 forme une succession de commandes binaires pour ouvrir/fermer le dispositif interrupteur 134. L'intensité moyenne du courant électrique qui traverse la source lumineuse élémentaire 110, et donc l'intensité lumineuse moyenne émise par cette source lumineuse élémentaire, reflète la valeur moyenne du signal de commande PWM 136.

La matrice de sources lumineuses élémentaires 105 comprend à titre d'exemple et non-limitatif, selon l'épaisseur du substrat et commençant par l'extrémité opposée à l'emplacement des sources élémentaires 110, une première couche électriquement conductrice déposée sur un substrat électriquement isolant. Il suit une couche semi-conductrice dopée n, dont l'épaisseur se situe entre 0.1 et 2 µm. Cette épaisseur est nettement inférieure à celles de diodes électroluminescentes connues, pour lesquelles la couche correspondante présente une épaisseur de l'ordre de 1 à 2 µm. La couche suivante est la couche active de puits quantiques d'une épaisseur d'environ 30 nm, suivie d'une couche bloquant des électrons, et finalement une couche semi-conductrice dopée p, cette dernière ayant une épaisseur d'environ 300nm. De préférence, la première couche est une couche de (Al)GaN:Si, la deuxième couche une couche de n-GaN:Si, la couche active comprend des puits quantiques en InGaN alternant avec des barrières en GaN. La couche bloquante est de préférence en AlGaN:Mg et la couche dopée p est de préférence en p-GaN:Mg. Le nitrure de Galium dopé n présente une résistivité de 0.0005 Ohm/cm tandis que le nitrure de Galium dopé p présente une résistivité de 1 Ohm/cm. Les épaisseurs des couches proposées permettent notamment d'augmenter la résistance série interne de la source élémentaire, tout en réduisant de manière significative son temps de fabrication, comme la couche dopée n est moins épaisse comparée à des LEDs connues et nécessite un temps de dépôt moins important. A titre d'exemple, typiquement 5 heures de temps de dépôts en MOCVD est nécessaire pour une LED de configuration standard avec 2µ de couche n, et ce temps peut être réduit de 50% si l'épaisseur de la couche n est réduite à 0.2µ.

Afin d'obtenir des sources lumineuses élémentaires 110 présentant des couches semi-conductrices ayant des épaisseurs homogènes, le composant monolithique 105 est de préférence fabriqué en déposant les couches de manière homogène et uniforme sur au moins une partie de la surface du substrat, de manière à la recouvrir. Le dépôt des couches est par exemple réalisé par un procédé d'épitaxie en phase vapeur aux organométalliques (« métal oxide chemical vapor déposition »), MOCVD. De tels procédés ainsi que des réacteurs pour leur mise en oeuvre sont connus pour déposer des couches semi-conductrices sur un substrat, par exemple depuis les documents de brevet WO 2010/072380 A1 ou WO 01/46498 A1. Les détails de leur mise en oeuvre ne seront par conséquent pas détaillés dans le cadre la présente invention. Ensuite, les couches ainsi formées sont pixélisées. A titre d'exemple et non-limitatif, les couches sont enlevées par des procédés lithographiques connus et par etching aux endroits qui correspondent par la suite aux espaces séparant les sources lumineuses élémentaires 110 les unes des autres sur le substrat. Ainsi, une pluralité de plusieurs dizaines ou centaines ou milliers de pixels 110 de surface inférieure à un millimètre-carré pour chaque pixel individuel, et de surface totale supérieure à 2 millimètre-carré ayant des couches semi-conductrices à épaisseurs homogènes, et présentant donc des résistances série internes homogènes et élevées peuvent être produites sur le substrat d'une source lumineuse matricielle 105. De manière générale, plus la taille de chaque pixel de LED diminue, plus sa résistance série augmente, et plus ce pixel est adapté à être piloté par une source de tension. Alternativement, le substrat comprenant les couches épitaxiées recouvrant au moins une partie de la surface du substrat est scié ou coupé en sources lumineuses élémentaires, chacune des sources lumineuses élémentaires ayant des caractéristiques similaires au niveau de leur résistance série interne.

L'invention se rapporte à même titre à des types de sources lumineuses élémentaires à éléments semi-conducteurs impliquant d'autres configurations de couches semi-conductrices. Notamment les substrats, les matériaux semi-conducteurs des couches, l'agencement des couches, leurs épaisseurs et d'éventuels vias entre les couches peuvent être différents de l'exemple qui vient d'être décrit.

L'illustration de la figure 2 montre un dispositif lumineux 200 comprenant une source lumineuse pixelisée ou matricielle 205 selon un autre mode de réalisation préféré de l'invention. La source lumineuse matricielle 205 comprend une pluralité de sources lumineuses élémentaires à élément semi-conducteur électroluminescent 210, de type LED, et un substrat commun non-illustré. Chaque source lumineuse élémentaire comprend une surface émettrice d'une étendue de 0,14 x 0,14 mm, ou moins. Lorsqu'une source lumineuse élémentaire de cette taille est parcourue par un courant électrique supérieur ou égale à l'intensité du courant direct, elle subit un gradient de température de l'ordre de 20°C au bout de quelques millisecondes, voire d'une milliseconde ou moins.

Le dispositif 200 comprend un circuit de gestion de l'alimentation 230 électrique de deux groupes de sources lumineuses élémentaires. Dans l'exemple de la figure 2, un premier les sources lumineuses élémentaires du premier groupe 210 s'alternent avec les sources lumineuses élémentaires 210' du deuxième groupe. Le circuit de gestion comprend pour chaque source lumineuse élémentaire, un dispositif interrupteur 234, 234' qui est commandé par le biais d'un signal de commande 236, 236' respectivement, pour prendre un état ouvert ou un état fermé. L'agencement est tel que, lorsque l'interrupteur est dans l'état fermé, la source lumineuse élémentaire correspondante est connectée à une source d'électricité, alors que dans l'état ouvert, la source lumineuse élémentaire n'y est pas connectée.

Une unité de commande 232 génère le signal de commande 236. Le signal est d'allure binaire, correspondant aux deux états distincts que les éléments interrupteurs 234 peuvent prendre. Il s'agit d'un signal à modulation de largeur d'impulsions, PWM, dont la fréquence est supérieure ou égale à 300Hz, et de préférence supérieur ou égale à 1kHz. A cette fréquence, la phase pendant laquelle un interrupteur 234 est fermé et pendant laquelle la source lumineuse élémentaire correspondante 210 émet de la lumière et s'échauffe, est suffisamment courte pour que sa jonction semi-conductrice ne s'échauffe pas plus de 20°C. Ceci évite une détérioration de la jonction.

L'unité de commande 232 génère également le signal de commande de type PWM 236 à destination du deuxième groupe de sources lumineuses 210'. Les signaux 236 et 236 sont tels que les deux groupes de sources lumineuse élémentaires 210, 210' ne sont pas tous les temps connectés ensemble à la source d'électricité. Par exemple, le signal 236 peut avoir un rapport cyclique de 50% et être formé d'une moitié de cycle destinée à commander les dispositifs interrupteurs vers leur état fermé, suivie d'une deuxième moitié de cycle destinée à commander les dispositifs interrupteurs vers leur état ouvert. Le signal 236' peut alors être une copie décalée d'un demi cycle du signal 236, de manière à ce que les groupes de sources lumineuses élémentaires 210, 210' sont alimentées en électricité de manière alternante. Le signal 236' peut dans ce cas être généré à partir du signal 236 par le biais d'un circuit à retard, connu dans l'art. D'autres modes de réalisation sont envisageables sans pour autant sortir du cadre de l'invention. L'avantage de cet arrangement est que les sources lumineuses élémentaires d'un groupe 210 ne contribuent pas tout le temps à l'échauffement des sources lumineuses élémentaire d'un autre groupe 210' dont les sources lumineuses élémentaires sont spatialement très rapprochées de celles du premier groupe. Cet agencement s'applique également à une pluralité plus importante de groupes de sources élémentaires au sein de la matrice 205.

Dans le mode de réalisation de la figure 2, le circuit de gestion de l'alimentation électrique 230 est abrité par un circuit intégré 220, soudé sur la face inférieure du substrat commun, qui abrite les sources lumineuses élémentaires 210, 210' sur sa face supérieure, de manière à établir un contact mécanique et électrique avec le substrat et les sources lumineuses élémentaires.

L'utilisation d'un circuit intégré 120 en contact mécanique et électrique avec le substrat sur lequel résident les sources lumineuses élémentaires, permet de s'affranchir de connexions filaires, dont le nombre serait au moins égal au nombre de pixels de la source lumineuse matricielle. Comme le circuit de gestion 230 est spatialement rapproché de la matrice 205 de sources lumineuses élémentaires 210, 210', les délais de commande sont négligeables. En effet, les composants du circuit 230 se trouvent à quelques micromètres en-dessous des sources lumineuses élémentaires.

De préférence, un circuit d'alimentation peut être intégré dans le substrat lors de la fabrication du composant monolithique 205.

Selon un autre mode de réalisation non-illustré, le décalage entre les temps d'allumages respectifs des groupes de sources lumineuses élémentaires (210, 210' dans le cas de la figure 2), sont réalisés par une unité de retard intégrée sous chaque source lumineuse. Un signal de commande de type PWM tel qu'il vient d'être décrit pour d'autres modes de réalisation est utilisé pour commander les sources lumineuses élémentaires. Cependant, les unités de retard de chaque source lumineuse élémentaires n'appliquent la commande qu'après écoulement de leur retard respectif. L'agencement peut de préférence être tel que les unités de retard sont fonctionnellement reliées en une chaîne, et tel que le retard d'une source lumineuse élémentaire ne commence à s'écouler une fois que le retard de la source lumineuse élémentaire précédente de la chaîne s'est écoulé. De cette façon, l'échauffement simultané de toutes les sources lumineuses élémentaires est également réduit.

Il va de soi que le circuit intégré peut comprendre d'autres circuits électroniques et/ou éléments de mémoire utilisés pour d'autres fonctions en rapport avec la source lumineuse matricielle et/ou avec les sources lumineuses élémentaires. Ceci comprend mais ne se limite pas à des circuits de détection d'un court-circuit, ou d'un défaut en circuit-ouvert d'une source lumineuse élémentaire.

L'étendue de la protection est déterminée par les revendications.

## Revendications

1. Dispositif lumineux (100, 200) pour un véhicule automobile, comprenant une source lumineuse matricielle (105, 205) ayant une matrice de sources lumineuses élémentaires à élément semi-conducteur électroluminescent (110, 210), et un circuit de gestion de l'alimentation électrique (130, 230) d'au moins un groupe de sources lumineuses élémentaires, le circuit de gestion de l'alimentation électrique comprenant une unité de commande (132, 232) et, pour chaque source lumineuse élémentaire dudit au moins un groupe, un élément interrupteur (134, 234, 234') pour connecter de manière sélective ladite source lumineuse élémentaire à une source d'électricité, l'unité de commande étant en outre destinée à commander l'état d'ouverture des éléments interrupteurs moyennant un signal de commande binaire à modulation de largeur d'impulsions (136, 236, 236'), la surface émettrice de chacune des sources lumineuses élémentaires est inférieure ou égale à 0.2 mm², le dispositif lumineux étant **caractérisé en ce que** l'unité de commande est configurée pour émettre un signal de commande binaire à modulation de largeur d'impulsions ayant une fréquence supérieure ou égale à 300 Hz de répétition périodique d'une alternance entre un état émetteur de lumière et un état éteint d'au moins une des sources lumineuses élémentaires dudit au moins un groupe.

2. Dispositif lumineux selon la revendication 1, **caractérisé en ce que** la fréquence du signal de commande (136, 236, 236') est supérieure ou égale à 1 kHz.

3. Dispositif lumineux selon une des revendications 1 ou 2, **caractérisé en ce que** ledit au moins un groupe de sources lumineuses élémentaires comprend toutes les sources lumineuses élémentaires (110) de la matrice de sources lumineuses élémentaires.

4. Dispositif lumineux selon une des revendications 1 ou 2, **caractérisé en ce que** le circuit de gestion de l'alimentation électrique est configuré pour commander l'état d'ouverture des éléments interrupteurs (234, 234') d'au moins deux groupes de sources lumineuses élémentaire (210, 210') de la matrice de sources lumineuses élémentaires en alternance.

5. Dispositif lumineux selon une des revendications 1 à 4, **caractérisé en ce que** la source lumineuse matricielle comprend un circuit intégré (220) en contact avec la matrice de sources lumineuses (205), et **en ce que** le circuit intégré comprend au moins une partie du circuit de gestion de l'alimentation électrique (230) des sources lumineuses élémentaires.

6. Dispositif lumineux selon une des revendications 1 à 5, **caractérisé en ce que** le dispositif comprend des moyens d'atténuation de fréquences acoustiques.

7. Dispositif lumineux selon une des revendications 5 ou 6, **caractérisé en ce que** le circuit intégré comprend pour chacune des sources lumineuses élémentaires de la matrice de sources lumineuse élémentaires une unité de retard configurée pour retarder d'une durée prédéterminée l'alimentation de la source élémentaire suite à la réception d'une commande du signal de commande.

8. Dispositif lumineux selon la revendication 7, **caractérisé en ce que** l'unité de retard de chaque source lumineuse élémentaire est reliée fonctionnellement à l'unité de retard d'une autre source lumineuse élémentaire, l'agencement étant tel que le retard pour la deuxième source lumineuse élémentaire ne commence qu'à s'écouler une fois que le retard de la première source lumineuse élémentaire s'est écoulé.

9. Dispositif lumineux selon une des revendications 7 ou 8, **caractérisé en ce que** le retard pour chaque source lumineuse élémentaire est identique.

10. Dispositif lumineux selon une des revendications 7 à 9, **caractérisé en ce que** l'unité de retard comprend un élément de mémoire pour l'enregistrement d'une valeur de retard.

## Patentansprüche

1. Leuchtenvorrichtung (100, 200) für ein Kraftfahrzeug, beinhaltend eine Matrixlichtquelle (105, 205), die eine Matrix elementarer Lichtquellen mit lichtemittierendem Halbleiterbauelement (110, 210) aufweist, und eine Schaltung zur Verwaltung der Stromversorgung (130, 230) mindestens einer Gruppe von elementaren Lichtquellen, wobei die Stromversorgungsverwaltungsschaltung eine Steuerungseinheit (132, 232) und, für jede elementare Lichtquelle der mindestens einen Gruppe, ein Schaltelement (134, 234, 234') beinhaltet, um die elementare Lichtquelle selektiv mit einer Stromquelle zu verbinden, wobei die Steuerungseinheit ferner dazu bestimmt ist, den Öffnungszustand der Schaltelemente mittels eines pulsbreitenmodulierten binären Steuersignals (136, 236, 236') anzusteuern, wobei die emittierende Oberfläche jeder der elementaren Lichtquellen kleiner als oder gleich 0,2 mm² ist, wobei die Leuchtenvorrichtung **dadurch gekennzeichnet ist, dass** die Steuerungseinheit dazu konfiguriert ist, ein pulsbreitenmoduliertes binäres Steuersignal mit einer Frequenz größer als oder gleich 300 Hz mit einem sich periodisch wiederholenden Wechsel zwischen einem lichtemittierenden Zustand und einem ausgeschalteten Zustand mindestens einer der elementaren Lichtquellen der mindestens einen Gruppe zu emittieren.

2. Leuchtenvorrichtung nach Anspruch 1, **dadurch gekennzeichnet, dass** die Frequenz des Steuersignals (136, 236, 236') größer als oder gleich 1 kHz ist.

3. Leuchtenvorrichtung nach einem der Ansprüche 1 oder 2, **dadurch gekennzeichnet, dass** die mindestens eine Gruppe von elementaren Lichtquellen alle elementaren Lichtquellen (110) der Matrix elementarer Lichtquellen beinhaltet.

4. Leuchtenvorrichtung nach einem der Ansprüche 1 oder 2, **dadurch gekennzeichnet, dass** die Stromversorgungsverwaltungsvorrichtung dazu konfiguriert ist, den Öffnungszustand der Schaltelemente (234, 234') von mindestens zwei Gruppen von elementaren Lichtquellen (210, 210') der Matrix elementarer Lichtquellen im Wechsel anzusteuern.

5. Leuchtenvorrichtung nach einem der Ansprüche 1 bis 4, **dadurch gekennzeichnet, dass** die Matrixlichtquelle eine integrierte Schaltung (220) in Kontakt mit der Matrix von Lichtquellen (205) beinhaltet und dass die integrierte Schaltung mindestens einen Teil der Stromversorgungsverwaltungsschaltung (230) der elementaren Lichtquellen beinhaltet.

6. Leuchtenvorrichtung nach einem der Ansprüche 1 bis 5, **dadurch gekennzeichnet, dass** die Vorrichtung Mittel zur Dämpfung akustischer Frequenzen beinhaltet.

7. Leuchtenvorrichtung nach einem der Ansprüche 5 oder 6, **dadurch gekennzeichnet, dass** die integrierte Schaltung für jede der elementaren Lichtquellen der Matrix elementarer Lichtquellen eine Verzögerungseinheit beinhaltet, die dazu konfiguriert ist, die Versorgung der elementaren Quelle im Anschluss an den Empfang einer Ansteuerung des Steuersignals um eine vorbestimmte Dauer zu verzögern.

8. Leuchtenvorrichtung nach Anspruch 7, **dadurch gekennzeichnet, dass** die Verzögerungseinheit jeder elementaren Lichtquelle funktionsmäßig mit der Verzögerungseinheit einer anderen elementaren Lichtquelle verbunden ist, wobei die Anordnung derart ist, dass die Verzögerung für die zweite elementare Lichtquelle erst dann beginnt abzulaufen, wenn die Verzögerung der ersten elementaren Lichtquelle abgelaufen ist.

9. Leuchtenvorrichtung nach einem der Ansprüche 7 oder 8, **dadurch gekennzeichnet, dass** die Verzögerung für jede elementare Lichtquelle identisch ist.

10. Leuchtenvorrichtung nach einem der Ansprüche 7 bis 9, **dadurch gekennzeichnet, dass** die Verzögerungseinheit ein Speicherelement zur Aufzeichnung eines Verzögerungswerts beinhaltet.

## Claims

1. Luminous device (100, 200) for an automotive vehicle, comprising a matrix-array light source (105, 205) having a matrix array of electroluminescent semiconductor element-based elementary light sources (110, 210), and a circuit for managing the supply of electrical power (130, 230) to at least one group of elementary light sources, the circuit for managing the supply of electrical power comprising a control unit (132, 232) and, for each elementary light source of said at least one group, a switch element (134, 234, 234') for selectively connecting said elementary light source to an electricity source, the control unit being further intended to control the open state of the switch elements by means of a pulse-width-modulation binary control signal (136, 236, 236'), the emitting area of each of the elementary light sources being smaller than or equal to 0.2 mm², the luminous device being **characterized in that** the control unit is configured to transmit a pulse-width-modulation binary control signal having a frequency higher than or equal to 300 Hz commanding periodic repetition of an alternation between a light-emitting state and an off state of at least one of the elementary light sources of said at least one group.

2. Luminous device according to Claim 1, **characterized in that** the frequency of the control signal (136, 236, 236') is higher than or equal to 1 kHz.

3. Luminous device according to one of Claims 1 and 2, **characterized in that** said at least one group of elementary light sources comprises all of the elementary light sources (110) of the matrix array of elementary light sources.

4. Luminous device according to one of Claims 1 and 2, **characterized in that** the circuit for managing the supply of electrical power is configured to control the open state of the switch elements (234, 234') of at least two groups of elementary light sources (210, 210') of the matrix array of elementary light sources in alternation.

5. Luminous device according to one of Claims 1 to 4, **characterized in that** the matrix-array light source comprises an integrated circuit (220) in contact with the matrix array of light sources (205), and **in that** the integrated circuit comprises at least a portion of the circuit for managing the supply of electrical power (230) to the elementary light sources.

6. Luminous device according to one of Claims 1 to 5, **characterized in that** the device comprises means for attenuating acoustic frequencies.

7. Luminous device according to one of Claims 5 and 6, **characterized in that** the integrated circuit comprises, for each of the elementary light sources of the matrix array of elementary light sources, a delay unit configured to delay, by a predetermined duration, the supply of power to the elementary source following reception of a command from the control signal.

8. Luminous device according to Claim 7, **characterized in that** the delay unit of each elementary light source is functionally connected to the delay unit of another elementary light source, the arrangement being such that the delay for the second elementary light source starts to elapse only once the delay of the first elementary light source has elapsed.

9. Luminous device according to one of Claims 7 and 8, **characterized in that** the delay for each elementary light source is identical.

10. Luminous device according to one of Claims 7 to 9, **characterized in that** the delay unit comprises a memory element for recording a delay value.
